# EUROPÄISCHE PATENTANMELDUNG

(11) **EP 2 573 632 A1**
(43) Veröffentlichungstag der Anmeldung: **27.03.2013**
(21) Anmeldenummer: 11401594.4
(22) Anmeldetag: 20.09.2011
(51) Int. Cl.: G05B 19/042, H04L 12/28

(54) **Verfahren zum Betrieb eines Haushaltsgeräts und zur Verwendung in einem solchen Verfahren vorgesehenes Haushaltsgerät**

(71) Anmelder: Miele & Cie. KG, 33332 Gütersloh (DE)
(72) Erfinder: Herden, Rudolf, 33442 Herzebrock-Clarholz (DE); Meyer, Annette, 26919 Brake (DE); Schrutek, Christian, 76135 Karlsruhe (DE); Schöning, Achim, 33613 Bielefeld (DE); Westerheide, Ralf, 49176 Hilter (DE)

(57) **Zusammenfassung**

Es wird ein Verfahren zum Aktualisieren oder Ergänzen von Haushaltsgerätprogrammen (24) im Speicher (20) eines Haushaltsgerät (10) angegeben, das die folgenden Schritte umfasst: Es wird eine kommunikative Verbindung zwischen dem Haushaltsgerät (10) und einer im Internet (14) bereitgestellten Datenbasis (18) hergestellt. In der Datenbasis (18) wird mindestens ein Haushaltsgerätprogramm (24) ausgewählt. Das oder jedes ausgewählte Haushaltsgerätprogramm (24) wird zum Haushaltsgerät (10) übertragen und in dessen Speicher (20) transferiert.

## Beschreibung

Die Erfindung betrifft ein Verfahren zum Betrieb eines Haushaltsgeräts und im Weiteren einen zur Verwendung in dem Verfahren vorgesehenen Haushaltsgeräts. Bei dem hier betroffenen Haushaltsgerät handelt es sich bevorzugt um solche, wie sie für Privathaushalte Verwendung finden. Solche Haushaltsgeräte sind an sich bekannt. Bekannt ist auch, dass solche Haushaltsgeräte einen Speicher mit einem Steuerungsprogramm und zumindest einem vom Steuerungsprogramm ausführbaren Haushaltsgerätprogramm sowie eine Verarbeitungseinheit in Form von oder nach Art eines Mikroprozessors zur Ausführung des Steuerungsprogramms aufweisen.

Auch wenn heute übliche Haushaltsgeräte mit einer Mehrzahl von Haushaltsgerätprogrammen ausgeliefert werden, welche die wesentlichen Anwendungsfälle abdecken, entsteht beim Verbraucher mitunter der Wunsch, für spezifische Anwendungssituationen ein möglichst genau auf diese abgestimmtes Haushaltsgerätprogramm zur Verfügung zu haben. Andererseits kann sich auch ergeben, dass hinsichtlich eines oder mehrerer Haushaltsgerätprogramme, wie sie einem Haushaltsgerät bei dessen Fertigung und/oder Auslieferung beigegeben werden, neue Erkenntnisse zutage treten, die eine Anpassung oder Änderung des Haushaltsgerätprogramms nahe legen. Dadurch entsteht der Wunsch, ein Haushaltsgerätprogramm oder mehrere Haushaltsgerätprogramme auch nach der Auslieferung des Haushaltsgeräts anpassen zu können oder weitere Haushaltsgerätprogramme ergänzen zu können.

Eine Aufgabe der vorliegenden Erfindung besteht entsprechend darin, ein Verfahren anzugeben, mit dem eine solche Anpassung und/oder Ergänzung von Haushaltsgerätprogrammen möglich ist.

Diese Aufgabe wird erfindungsgemäß mit einem Verfahren mit den Merkmalen des Anspruchs 1 gelöst. Dazu ist bei einem Verfahren zum Betrieb eines Haushaltsgeräts, wobei das Haushaltsgerät einen Speicher mit einem Steuerungsprogramm und zumindest einem vom Steuerungsprogramm ausführbaren Haushaltsgerätprogramm sowie eine Verarbeitungseinheit zur Ausführung des Steuerungsprogramms umfasst, vorgesehen, dass ein mit dem Internet und dem Haushaltsgerät kommunikativ verbindbarer oder von dem Haushaltsgerät umfasster und dann zumindest mit dem Internet kommunikativ verbindbarer Computer ein Computerprogramm zum Austausch von Daten mit dem Haushaltsgerät und einer im Internet bereitgestellten Datenbasis umfasst, wobei mit dem Computer unter Kontrolle des Computerprogramms in der Datenbasis zumindest ein dort zur Verfügung gestelltes Haushaltsgerätprogramm ausgewählt, auf den Computer übertragen und von dort in den Speicher des Haushaltsgeräts transferiert wird.

Der Vorteil der Erfindung besteht darin, dass aus der im Internet bereitgestellten Datenbasis, auf die nach Art eines sogenannten Webshops oder dergleichen mit dem Computer ein Zugriff erfolgt, zusätzliche oder aktualisierte Haushaltsgerätprogramme auf das Haushaltsgerät geladen werden können. Der Nutzer des Haushaltsgeräts kann damit dessen Funktionalität ergänzen oder optimieren. Wenn hier und im Folgenden von einem Haushaltsgerätprogramm oder von Haushaltsgerätprogrammen gesprochen wird, ist zu beachten, dass sich die Erfindung generell zum Transfer eines oder mehrerer Haushaltsgerätprogramme eignet. Eine Verwendung des Begriffs im Singular oder im Plural ist jeweils nicht als Einschränkung auszulegen.

Bei dem mit dem Internet und dem Haushaltsgerät kommunikativ verbindbaren Computer handelt es sich z.B. um einen sogenannten Personalcomputer oder um einen mobilen Computer nach Art eines Laptops, Noteboooks, Handhelds, usw. Solche Computer sind heute in vielen Haushalten bereits vorhanden, so dass sich ein solcher Computer als Schnittstelle zwischen dem Haushaltsgerät und der im Internet erreichbaren Datenbasis anbietet. Ein Computer, der mit dem Internet kommunikativ verbindbar ist, kann auch bereits von dem Haushaltsgerät umfasst sein, dann besteht bereits eine kommunikative Verbindung zwischen einem solchen Computer und dem Haushaltsgerät und es ist für einen solchen Computer nur noch die kommunikative Verbindbarkeit mit dem Internet erforderlich, z.B. indem eine sogenannte WLAN-Schnittstelle vorgesehen ist und indem eine kommunikative Verbindung mit dem Internet über einen an sich bekannten WLAN-Router hergestellt wird. Bei einem von dem Haushaltsgerät umfassten Computer kann es sich auch um dessen um eine entsprechende Kommunikationsschnittstelle erweiterte Steuerungseinrichtung handeln, bei der das Steuerungsprogramm um Routinen zum Datenübertragung ergänzt ist.

Indem mit dem Computer unter Kontrolle des Computerprogramms eine Verbindung mit der im Internet bereitgestellten Datenbasis hergestellt und in der Datenbasis zumindest ein dort zur Verfügung gestelltes Haushaltsgerätprogramm ausgewählt wird, kann der Benutzer entscheiden, in welchem Umfang er die Funktionalität seines Haushaltsgeräts optimieren und/oder ergänzen möchte. Das oder jedes auf diese Art ausgewählte Haushaltsgerätprogramm wird auf den Computer übertragen und von dort in den Speicher des Haushaltsgeräts transferiert. Sobald auf diese Weise ein neues, ergänztes oder optimiertes Haushaltsgerätprogramm ordnungsgemäß in den Speicher des Haushaltsgeräts transferiert ist, steht es zur Ausführung durch das Steuerungsprogramm des Haushaltsgeräts zur Verfügung und die Ergänzung oder Optimierung der Funktionalität des Haushaltsgeräts ist abgeschlossen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches hin; sie können auch selbständige Erfindungen enthalten, die eine von den Gegenständen der vorhergehenden Ansprüche unabhängige Gestaltung aufweisen und sind nicht als ein Verzicht auf die Erzielung eines selbständigen, gegenständlichen Schutzes für deren Merkmale zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass beim ersten Zugriff auf die Datenbasis im Zusammenhang mit einer Anmeldung oder dergleichen zum Zugriff auf die Datenbasis zumindest anhand einer das Haushaltsgerät identifizierenden Kennung eine Signatur erstellt und im Bereich der Datenbasis in einem Datensatz gespeichert sowie zum Computer übertragen wird, wobei im Zusammenhang mit der Auswahl eines Haushaltsgerätprogramms vom Computer die dortige Signatur übertragen sowie im Bereich der Datenbasis mit der oder jeder dort gespeicherten Signatur verglichen wird und bei erfolgreichem Vergleich das oder jedes ausgewählte Haushaltsgerätprogramm zumindest mit der das Haushaltsgerät identifizierenden Kennung kodiert und zum Computer übertragen wird. Die Anmeldung zum Zugriff auf die Datenbasis erlaubt für den Betreiber der Datenbasis eine Zugriffskontrolle. Dies ist in besonders einfacher Art und Weise möglich, indem im Zusammenhang mit der Anmeldung eine Signatur erstellt wird und diese bei beiden Teilnehmern späterer Kommunikationsvorgänge gespeichert wird, also im Bereich der Datenbasis und auf dem Computer. Im Bereich der Datenbasis bietet es sich an, die Signatur in einem Datensatz zu speichern, so dass in dem Datensatz über die Signatur hinaus weitere Informationen vorgehalten werden können. Im Zusammenhang mit einer Auswahl eines Haushaltsgerätprogramms, also bei der kommunikativen Verbindung mit der Datenbasis zur Auswahl eines solchen Haushaltsgerätprogramms, vor, während oder nach der Auswahl des Haushaltsgerätprogramms, usw., wird vom Computer die dortige Signatur übertragen und im Bereich der Datenbasis mit der oder jeder dort gespeicherten Signatur verglichen. Ein Vergleich der übertragenen Signatur mit jeder im Bereich der Datenbasis gespeicherten Signatur meint nicht notwendig, dass die übertragene Signatur tatsächlich mit jeder einzelnen im Bereich der Datenbasis gespeicherten Signatur verglichen wird, sondern es kann z.B. auch anhand einer Kennung, z.B. einer laufenden Nummer oder dergleichen, eine Gruppierung der gespeicherten Signaturen vorgesehen sein, so dass ein Vergleich mit einer reduzierten Anzahl gespeicherter Signaturen ausreicht, um die übertragene Signatur zu authentifizieren. Ein Beispiel in dieser Hinsicht ist ein anhand der Kennungen gebildeter sogenannter balancierter Baum, wobei die Kennung der übertragenen Signatur zunächst mit der Kennung an der Wurzel eines solchen Baums verglichen wird und sodann je nachdem, ob die übertragene Kennung größer oder kleiner als die Kennung an der Baumwurzel ist, rechts oder links im Baum vorangeschritten wird und an nachfolgenden Baumknoten dieser Vergleich wiederholt wird. Selbst bei einer Vielzahl von gespeicherten Datensätzen reduziert sich die Anzahl der notwendigen Vergleiche auf diese oder andere Arten auf ein Minimum. Bei einem erfolgreichen Vergleich, also bei einer erfolgten Authentifizierung der vom Computer übertragenen Signatur, kann das oder jedes ausgewählte Haushaltsgerätprogramm zum Computer übertragen werden.

Bei einem Einsatz bei einer Waschmaschine ist hierbei folgender Aspekt hervorzuheben. Damit auf diese Weise nicht die Gefahr entsteht, dass heruntergeladene Haushaltsgerätprogramme, hier Waschautomatenprogramme, auf einem nicht für deren Ausführung geeigneten Haushaltsgerät oder Waschautomaten zur Ausführung gebracht werden und damit zu Schäden an dem jeweiligen Waschgut oder gar dem Haushaltsgerät führen, ist bei einer besonderen Ausführungsform vorgesehen, dass im Zusammenhang mit der Übertragung zum Computer, also vor oder während der Übertragung, das oder jedes ausgewählte Waschautomatenprogramm zumindest mit der den Waschautomaten identifizierenden Kennung kodiert wird. Diese Kodierung kann eine Ergänzung des Waschautomatenprogramms um die Kennung oder auch eine Verschlüsselung des Waschautomatenprogramms mit der Kennung sowie jede sonstige Konvertierung oder Umsetzung des Waschautomatenprogramms unter Verwendung der Kennung sein. Jedenfalls handelt es sich um eine Kodierung, die der Waschautomat auflösen kann, also z.B. indem vor Ausführung eines auf diese Weise transferierten Waschautomatenprogramms überprüft wird, ob das Waschautomatenprogramm die Kennung umfasst oder sich mittels der Kennung dekodieren lässt. Dieser Ablauf kann entsprechend für andere Hausgeräte implementiert werden.

Demgemäß ist bei einer Ausführungsform des Verfahrens vorgesehen, dass am Computer zumindest ein von der Datenbasis übertragenes Waschautomatenprogramm zum Transfer zum Haushaltsgerät ausgewählt wird, wobei im Zusammenhang mit dem Transfer zum Haushaltsgerät das Steuerungsprogramm des Haushaltsgerät das oder jedes transferierte oder zu transferierende Haushaltsgerätprogramm hinsichtlich dessen Kodierung mit der den Haushaltsgerät identifizierenden Kennung prüft. Bei einer besonderen Ausführungsform ist darüber hinaus vorgesehen, dass im Erfolgsfall eine Quittung durch das Steuerungsprogramm des Haushaltsgeräts generiert und zum Computer übermittelt wird. Eine solche Quittung signalisiert dem Benutzer den erfolgreichen Transfer des oder jedes Haushaltsgerätprogramms zum Haushaltsgerät und bei einem vom Haushaltsgerät unabhängigen Computer kann daraufhin die kommunikative Verbindung zwischen Computer und Haushaltsgerät getrennt werden.

Wenn die vom Haushaltsgerät generierte Quittung mit dem Computer unter Kontrolle des Computerprogramms zur Datenbasis übertragen wird, kann auch der Datenbasis der erfolgreiche Transfer des oder jedes Haushaltsgerätprogramms angezeigt werden.

Bei einer weiteren Ausführungsform des Verfahrens ist vorgesehen, dass ein Verarbeitungsprogramm im Bereich der Datenbasis und zum Zugriff auf diese, also z.B. ein spezielles Webshop-Programm, aus der Datenbasis anhand der übermittelten Signatur und der davon umfassten Kennung aus einer Mehrzahl von in der Datenbasis zur Verfügung stehenden Haushaltsgerätprogrammen eine Gruppe von Haushaltsgerätprogrammen auswählt, die anhand der Kennung als zu dem zugrundeliegenden Haushaltsgerät passend identifizierbar sind. Dann ist der Benutzer beim Zugriff auf die Datenbasis von der Notwendigkeit enthoben, selbst erkennen oder entscheiden zu müssen, welche der von der Datenbasis umfassten Haushaltsgerätprogramme für seinen Haushaltsgerät geeignet sind. Die Verwendung der Datenbasis und die Auswahl eines oder mehrerer Haushaltsgerätprogramme werden damit erheblich leichter und vor allem übersichtlicher. Die zur Identifikation des jeweiligen Haushaltsgerät übermittelte Kennung ist z.B. eine Fabrikationsnummer oder dergleichen, die entweder einen Typ des jeweiligen Haushaltsgerät oder anhand derer in einer Produktionsdatenbasis der Typ des jeweiligen Haushaltsgerät ermittelbar ist. Eine Eignung eines Haushaltsgerätprogramms für ein bestimmtes Haushaltsgerät lässt sich auf dieser Basis anhand der Typen der Haushaltsgeräte, für die das Haushaltsgerätprogramm geeignet ist, kodieren, etwa indem das Haushaltsgerätprogramm in einem Datensatz bereitgestellt wird, der neben dem Haushaltsgerätprogramm zumindest einen Eintrag für einen Typ eines Haushaltsgeräts umfasst, für den das Haushaltsgerätprogramm geeignet ist. Auf diese oder ähnliche Art und Weise lässt sich ohne Weiteres eine Gruppe von Haushaltsgerätprogrammen ermitteln, die für den Benutzer des Haushaltsgeräts, der das Verfahren ausführt, relevant sind.

Bei einer besonderen Ausführungsform dieses Aspekts des Verfahrens ist vorgesehen, dass das Verarbeitungsprogramm anhand der vom Computer übertragenen Signatur einen Datensatz mit einer passenden Signatur ermittelt und in dem Datensatz ausgewählte und/oder übertragene Haushaltsgerätprogramme protokolliert. Der anhand der übertragenen Signatur durch das Verarbeitungsprogramm ausgewählte Datensatz steht je nach Betrachtungsweise für den Benutzer oder dessen Haushaltsgerät und indem in diesem Datensatz ausgewählte und/oder übertragene Haushaltsgerätprogramme protokolliert werden, kann der Benutzer z.B. eine Vorauswahl eines oder mehrerer Haushaltsgerätprogramme treffen, ohne unmittelbar die Übertragung des oder jedes ausgewählten Haushaltsgerätprogramms zum Computer (Download) veranlassen zu müssen. Der Benutzer kann sich also zu einem späteren Zeitpunkt wieder bei der Datenbasis anmelden und auf eine frühere Auswahl zurückgreifen. Außerdem bietet die Protokollierung je nach Geschäftsmodell des Betreibers der Datenbasis die Möglichkeit, die jeweiligen Dienstleistungen gegenüber dem Benutzer abrechnen zu können.

Eine besondere Ausführungsform zeichnet sich dabei dadurch aus, dass in dem Datensatz solche Haushaltsgerätprogramme protokolliert werden, für die eine vom Haushaltsgerät generierte Quittung übertragen wurde. Die Quittung wird vom Haushaltsgerät nach dem erfolgreichen Transfer eines Haushaltsgerätprogramms generiert. Wenn eine solche Quittung zur Datenbasis übertragen wird, ist eine Protokollierung der bereits heruntergeladenen Haushaltsgerätprogramme in dem den Benutzer/das Haushaltsgerät repräsentierenden Datensatz möglich, so dass bei späteren Zugriffen des Benutzers auf die Datenbasis ein bereits heruntergeladenes Haushaltsgerätprogramm nicht erneut angeboten werden muss und sich damit eine nochmals verbesserte Übersicht über den Funktionsumfang der Datenbasis ergibt.

Eine weitere Ausführungsform des Verfahrens zeichnet sich dadurch aus, dass beim Transferieren eines Haushaltsgerätprogramms in den Speicher des Haushaltsgeräts der Transfer zunächst in einen als frei gekennzeichneten Speicherbereich erfolgt, dass nach Abschluss des Transfers eine Integrität des transferierten Haushaltsgerätprogramms geprüft wird und nur bei erfolgreicher Prüfung das transferierte Haushaltsgerätprogramm als verwendbar markiert wird. Diese Ausführungsform des Verfahrens trägt eventuellen Fehlern, die beim Transfer eines Haushaltsgerätprogramms vom Computer in den Speicher des Haushaltsgeräts vorkommen können, Rechnung. Nur ein vollständig und korrekt übertragenes Haushaltsgerätprogramm darf durch das Steuerungsprogramm des Haushaltsgeräts ausgeführt werden, weil ansonsten Schäden am Waschgut oder am Haushaltsgerät zu besorgen sind. Die Integritätsprüfung des transferierten Haushaltsgerätprogramms stellt die Vollständigkeit und die Korrektheit des übertragenen Haushaltsgerätprogramms sicher. Eine einfache Möglichkeit dafür besteht darin, dass das Haushaltsgerätprogramm vor dem Transfer in den Speicher des Haushaltsgeräts, also entweder durch das Computerprogramm oder bereits im Bereich der Datenbasis, mit einer Prüfsumme (z.B. CRC) versehen wird und dass im Zusammenhang mit oder nach dem Transfer des Haushaltsgerätprogramms in den Speicher des Haushaltsgeräts mit der gleichen Bildungsregel für das transferierte Haushaltsgerätprogramm eine solche Prüfsumme gebildet wird. Dann reduziert sich die Integritätsprüfung auf den Vergleich der Prüfsummen. Alternativ oder zusätzlich kann auch das Haushaltsgerätprogramm im Computer mit dem zum Haushaltsgerät transferierten Haushaltsgerätprogramm verglichen werden (z.B. Binärvergleich). Nur bei einer erfolgreichen Integritätsprüfung wird das transferierte Haushaltsgerätprogramm als verwendbar markiert. Nur als verwendbar markierte Haushaltsgerätprogramme sind durch das Steuerungsprogramm des Haushaltsgeräts ausführbar.

Bei einer besonderen Ausführungsform des eben beschriebenen Aspekts des Verfahrens ist vorgesehen, dass bei einem zum Haushaltsgerät transferierten Haushaltsgerätprogramm im Zusammenhang mit dessen Markierung als verwendbar durch das Steuerungsprogramm ein etwaiges älteres Haushaltsgerätprogramm, das durch das transferierte Haushaltsgerätprogramm ersetzt wird, als inaktiv markiert wird. Auf diese Weise ist gewährleistet, dass der Benutzer, wenn er die Funktionalität seines Haushaltsgeräts aktualisieren will, wenn er also nur ein bestehendes Haushaltsgerätprogramm durch ein aktualisiertes oder optimiertes Haushaltsgerätprogramm ersetzen möchte, nach dem Transfer ohne Weiteres auch nur noch das aktualisierte oder optimierte Haushaltsgerätprogramm vorfindet, so dass eine irrtümliche Verwendung des älteren Haushaltsgerätprogramms ausgeschlossen ist. Zudem wird, wenn das ältere ersetzte Haushaltsgerätprogramm als inaktiv markiert ist, die Möglichkeit geschaffen, den von dem als inaktiv markierten Haushaltsgerätprogramm belegten Speicherplatz zu einem späteren Zeitpunkt für weitere Haushaltsgerätprogramme nutzen zu können.

Eine Erkennung, ob ein transferiertes Haushaltsgerätprogramm ein älteres Haushaltsgerätprogramm ersetzt, ist z.B. anhand einer das Haushaltsgerätprogramm identifizierenden Kennung möglich, so dass im Zusammenhang mit dem Transfer eines neuen Haushaltsgerätprogramms in den Speicher des Haushaltsgeräts sich die Identifizierung eventueller älterer Haushaltsgerätprogramme darauf reduziert, die bereits gespeicherten Haushaltsgerätprogramme im Hinblick auf eine gleiche oder ausreichend gleiche Kennung untersuchen zu müssen. Für eine solche Kennung bietet sich eine laufende Nummer, die ggf. um eine Revisionsnummer oder dergleichen ergänzt ist, an. Beispielhaft wird hier von einer Kennung in Form von z.B. "17.5" ausgegangen, wobei der Zahlenwert siebzehn das Haushaltsgerätprogramm und die nachgestellte fünf die Revisionsnummer des Haushaltsgerätprogramms kodiert. Eine solche Kennung kann in beliebiger Form von jedem Haushaltsgerätprogramm umfasst sein, also z.B. als sogenannter String, als High-Byte und Low-Byte, usw.

Insgesamt betrifft die Erfindung damit auch ein Haushaltsgerät zur Verwendung in einem Verfahren wie hier und nachfolgend beschrieben, mit einem Speicher und einem in den Speicher geladenen oder ladbaren Steuerungsprogramm mit Computerprogrammanweisungen zur Generierung einer Signatur anhand einer das Haushaltsgerät identifizierenden Kennung, mit Computerprogrammanweisungen zum Ausführen eines in den Speicher geladenen Haushaltsgerätprogramms, mit Computerprogrammanweisungen zum Transferieren eines von extern übertragenen Haushaltsgerätprogramms in den Speicher und mit Computerprogrammanweisungen zur Prüfung einer Integrität eines in den Speicher transferierten Haushaltsgerätprogramms.

Eine besondere Ausführungsform des Haushaltsgeräts zeichnet sich dabei dadurch aus, dass das Steuerungsprogramm auch Computerprogrammanweisungen zum Vergleich des transferierten Haushaltsgerätprogramms mit bereits zuvor in dem Speicher befindlichen Haushaltsgerätprogrammen umfasst. Ein solcher Vergleich muss sich nicht notwendig, wie oben bereits beschrieben, auf das Haushaltsgerätprogramm an sich beziehen, sondern kann sich auf den Vergleich von Kennungen, die das jeweilige Haushaltsgerätprogramm kodieren, beschränken.

Nachdem einzelne Aspekte der Erfindung in Software implementiert sind, ist die Erfindung damit einerseits auch ein Computerprogramm mit durch einen Computer ausführbaren Programmcodeanweisungen und andererseits ein Speichermedium mit einem derartigen Computerprogramm sowie schließlich auch eine Steuerungseinrichtung, in dessen Speicher als Mittel zur Durchführung des Verfahrens und seiner Ausgestaltungen ein solches Computerprogramm geladen oder ladbar ist. Ein derartiges Computerprogramm ist das Steuerungsprogramm des Haushaltsgeräts, das Verarbeitungsprogramm im Bereich der Datenbasis und schließlich auch das Computerprogramm auf dem als Schnittstelle zwischen Haushaltsgerät und Datenbasis fungierenden Computer.

Der Vorteil der Erfindung und ihrer Ausgestaltungen besteht damit insbesondere darin, dass die Funktionalität eines Haushaltsgeräts dynamisch durch Aktualisierung oder Ergänzung bereits bestehender Haushaltsgerätprogramme ergänzt oder angepasst werden kann. Der Hersteller des Haushaltsgeräts kann über die im Internet zur Verfügung gestellte Datenbasis Nutzern seiner Geräte aktualisierte oder zusätzliche Haushaltsgerätprogramme verfügbar machen, so dass sich die Attraktivität der Geräte steigert und für den Benutzer bei einer Kaufentscheidung nicht zu besorgen ist, dass die Funktionalität des jeweiligen Haushaltsgeräts evtl. in absehbarer Zeit bereits veraltet ist, weil z.B. für neuartige Textilien, etwa Funktionstextilien aus dem Sportbereich, kein spezielles Haushaltsgerätprogramm zur Verfügung steht. Umgekehrt besteht für den Hersteller von Haushaltsgeräten die Möglichkeit, die Interessenslage seiner Kunden anhand des Zugriffs auf die Datenbasis besser abschätzen zu können, so dass sich daraus im Weiteren ableiten lässt, in welcher Hinsicht durch aktuelle Kunden evtl. eine Ergänzung oder Optimierung des aktuellen Funktionsumfangs gewünscht ist, um diese und weitere Kunden in der Zukunft optimal zufrieden stellen zu können.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung, der oder jeder Ausführungsform sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen. Es zeigen:
- Figur 1: eine schematisch vereinfachte Darstellung eines Systems mit einem Haushaltsgerät und einer im Internet bereitgestellten Datenbasis sowie einem als Schnittstelle zwischen Haushaltsgerät und Datenbasis fungierenden Computer,
- Figur 2: eine schematisch vereinfachte Darstellung eines Ablaufs einer Auswahl eines Haushaltsgerätprogramms in der Datenbasis sowie eines Transfers des Haushaltsgerätprogramms zum Haushaltsgerät,
- Figur 3: weitere Details der Datenbasis und
- Figur 4: weitere Details des Haushaltsgeräts, speziell eine schematisch vereinfachte Darstellung von Inhalten von dessen Speicher, nämlich ein Steuerungsprogramm und mindestens ein Haushaltsgerätprogramm.

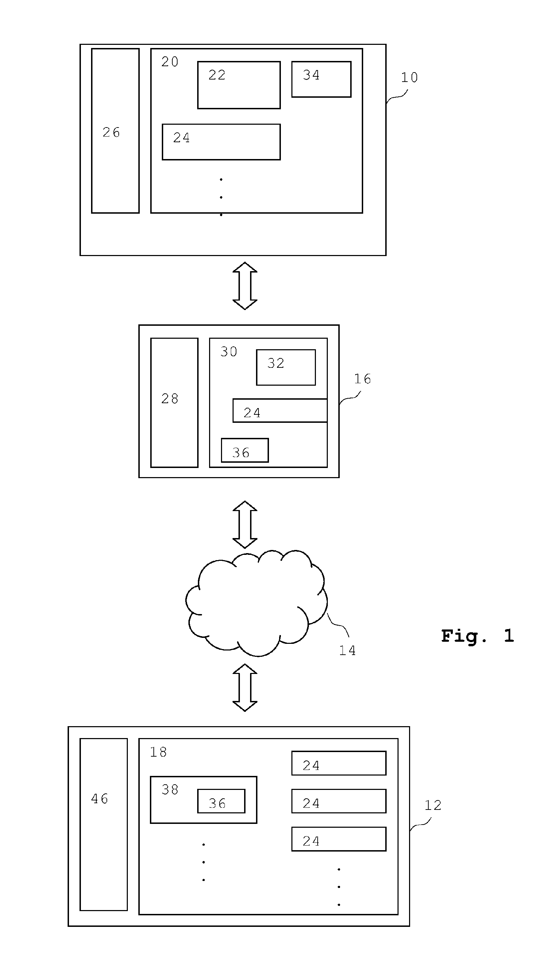

Figur 1 zeigt schematisch vereinfacht ein Haushaltgerät 10 und einen Webserver 12. Als Haushaltgerät 10 wird hierbei beispielhaft ein Waschautomat 10 verwendet. Der Webserver 12 ist im hier durch eine Wolke dargestellten Internet 14 erreichbar. Als Schnittstelle bzw. als Verbindungsvorrichtung zwischen dem Waschautomaten 10 und dem Webserver 12 fungiert ein Computer 16. Der Computer 16 ist mit dem Internet 14 und dem Waschautomaten 10 kommunikativ verbindbar oder (nicht dargestellt) vom Waschautomaten 10 umfasst bzw. in diesem integriert. Die kommunikative Verbindbarkeit ist in der Darstellung in Figur 1 durch Blockpfeile symbolisiert und es kommt grundsätzlich jede Art der kommunikativen Verbindung in Betracht, z.B. eine kommunikative Verbindung auf leitungslosem oder leitungsgebundenem Wege. Die kommunikative Verbindung erlaubt jedenfalls einen Austausch von Daten zwischen dem Computer 16 und dem Haushaltsgerät 10 einerseits und dem Computer 16 und einer auf den Webserver 12 im Internet 14 bereitgestellten Datenbasis 18 andererseits. Auf dem Weg vom Computer 16 zum Haushaltsgerät 10 oder umgekehrt sowie auf dem Weg vom Computer 16 zum Webserver 12 oder zur Datenbasis 18 und umgekehrt muss zum Austausch der jeweiligen Daten nicht notwendig das gleiche Datenübertragungsprotokoll verwendet werden und es kann ohne Weiteres sein, dass zum Datenaustausch zwischen Computer 16 und Waschautomat 10 ein proprietäres Datenübertragungsprotokoll oder ein Datenübertragungsprotokoll für serielle Verbindungen, z.B. RS-232, USB, oder ein Protokoll für drahtlose Infrarot oder Funkverbindungen usw. verwendet wird. Zur Datenübertragung im Internet 14 werden üblicherweise IP-basierte Protokolle verwendet.

Der Waschautomat 10 umfasst einen Speicher 20 mit einem Steuerungsprogramm 22 und zumindest einem von dem Steuerungsprogramm 22 ausführbaren Haushaltsgerätprogramm 24. Das Steuerungsprogramm 22 wird beim Betrieb des Haushaltsgeräts 10 durch eine Verarbeitungseinheit 26 in Form von oder nach Art eines Mikroprozessors ausgeführt. Der Computer 16 umfasst in an sich bekannter Art und Weise ebenfalls eine solche Verarbeitungseinheit 28 und einen Speicher 30. In den Speicher 30 ist oder wird ein Computerprogramm 32 geladen, unter dessen Kontrolle ein Austausch von Daten mit dem Waschautomat 10 und der im Internet 14 bereitgestellten Datenbasis 18 erfolgt. Dazu wird mit dem Computer 16 unter Kontrolle des Computerprogramms 32 in der Datenbasis 18 zumindest ein dort zur Verfügung gestelltes Haushaltsgerätprogramm 24 ausgewählt, auf den Computer 16 und dort in den Speicher 30 übertragen und von dort in den Speicher 20 des Haushaltsgeräts 10 transferiert.

Beim ersten Zugriff auf die Datenbasis 18 im Zusammenhang mit einer Anmeldung zum Zugriff auf die Datenbasis 18 wird zumindest anhand einer das Haushaltsgerät 10 identifizierenden Kennung 34, die z.B. im Speicher 20 des Haushaltsgeräts 10 hinterlegt sein kann und z.B. einer Fabrikationsnummer des Haushaltsgeräts 10 entspricht oder anhand einer solchen Fabrikationsnummer gebildet ist, eine Signatur 36 erstellt und im Bereich der Datenbasis 18 in einem Datensatz 38 gespeichert sowie zum Computer 16 übertragen. Im Zusammenhang mit der Auswahl eines Haushaltsgerätprogramms 24 in der Datenbasis 18 wird vom Computer 16 die dortige Signatur 36 übertragen sowie im Bereich der Datenbasis 18 mit der oder jeder dort gespeicherten Signatur 36 verglichen. Bei erfolgreichem Vergleich wird das oder jedes ausgewählte Haushaltsgerätprogramm 24 zumindest mit der das Haushaltsgerät identifizierenden Kennung 34, also den der Signatur 36 zumindest teilweise zugrunde liegenden Daten, versehen oder kodiert und zum Computer 16 übertragen.

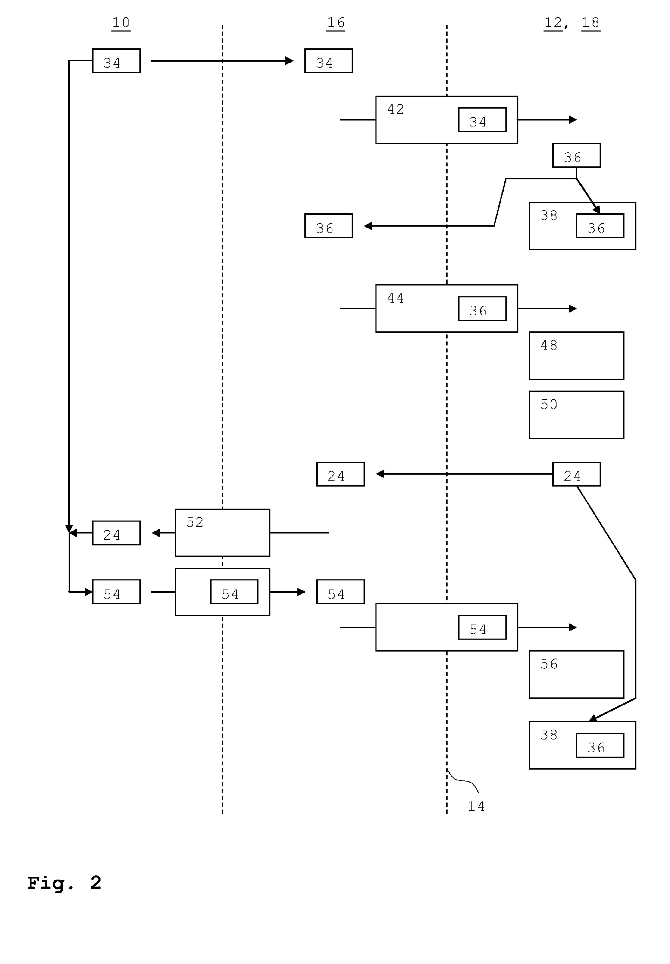

Figur 2 zeigt dazu eine schematisch vereinfachte Darstellung des Verfahrens in der Art eines sogenannten Raum-Zeit-Diagramms mit weiteren Details. Die Darstellung ist in drei Spalten unterteilt. Die linke Spalte stellt den Bereich des Haushaltsgeräts 10 dar und ist mit einer entsprechenden Bezugsziffer überschrieben. Die mittlere Spalte stellt den Bereich des als Schnittstelle oder als Datentransportmedium zwischen dem Haushaltsgerät 10 und der Datenbasis 18 fungierenden Computers 16 dar und ist ebenfalls mit einer entsprechenden Bezugsziffer überschrieben. Die rechte Spalte stellt den Bereich des Webservers 12 bzw. der Datenbasis 18 dar und ist mit den entsprechenden Bezugsziffern überschrieben.

Mit Bezug auf die Darstellung in Figur 1 und die Erläuterungen dazu zeigt Figur 2, dass zunächst die das Haushaltsgerät 10 identifizierende Kennung 34 zum Computer 16 übertragen wird. Sobald die Kennung 34 auf dem Computer 16 vorhanden ist, kann mittels des Computers 16 beim ersten Zugriff auf die Datenbasis 18 eine Anmeldung 42 erfolgen. Im Zusammenhang mit der Anmeldung 42 zum Zugriff auf die Datenbasis 18 wird dann zumindest anhand der das Haushaltsgerät 10 identifizierenden Kennung 34 eine Signatur 36 erstellt und im Bereich der Datenbasis 18 in einem Datensatz 38 gespeichert sowie zum Computer 16 übertragen. Im Zusammenhang mit der Auswahl 44 eines Haushaltsgerätprogramms 24 wird vom Computer 16 die dortige Signatur 36 an den Webserver 12 übertragen und durch die Verarbeitungseinheit 46 (Figur 1) mit dem dazugehörigen Verarbeitungsprogramm des Webservers 12, also im Bereich der Datenbasis 18, mit der oder jeder dort gespeicherten Signatur 36 verglichen. Bei einem erfolgreichen Vergleich 48 wird das oder jedes ausgewählte Haushaltsgerätprogramm 24 zumindest mit der das Haushaltsgerät 10 identifizierenden Kennung 34 versehen oder kodiert (Kodierung 50). Das oder jedes so kodierte Haushaltsgerätprogramm 24 wird anschließend zum Computer 16 übertragen. Am Computer 16 wird sodann zumindest ein von der Datenbasis 18 übertragenes Haushaltsgerätprogramm 24 zum Transfer 52 zum Haushaltsgerät 10 ausgewählt. Im Zusammenhang mit dem Transfer 52 zum Haushaltsgerät 10 prüft das Steuerungsprogramm 22 des Haushaltsgerät 10 das oder jedes transferierte oder zu transferierende Haushaltsgerätprogramm 24 hinsichtlich dessen Kodierung mit der das Haushaltsgerät 10 identifizierenden Kennung 34 und ob der Transfer 52 erfolgreich abgelaufen ist.

Bei einer besonderen Ausführungsform des Verfahrens ist vorgesehen, dass das Steuerungsprogramm 22 des Haushaltsgeräts 10 im Erfolgsfall eine Quittung 54 generiert und zum Computer 16 übermittelt. Für den Computer 16 und dessen Computerprogramm 28 bedeutet die Übermittlung der Quittung 54 den erfolgreichen Transfer eines Haushaltsgerätprogramms 24 in den Speicher 20 des Haushaltsgeräts 10. Die vom Haushaltsgerät 10 generierte Quittung kann darüber hinaus mit dem Computer 16 unter Kontrolle von dessen Computerprogramm 28 zum Webserver 12 bzw. zur Datenbasis 18 übertragen werden. Mit der empfangenen Quittung 54 kann eine Protokollierung 56 derjenigen Haushaltsgerätprogramme 24 erfolgen, die an den Haushaltsgerät 10 übertragen wurden. Für eine solche Protokollierung kommt besonders der Datensatz 38 in Betracht, der zur Aufnahme der das jeweiligen Haushaltsgerät 10 identifizierenden Signatur 36 angelegt wurde.

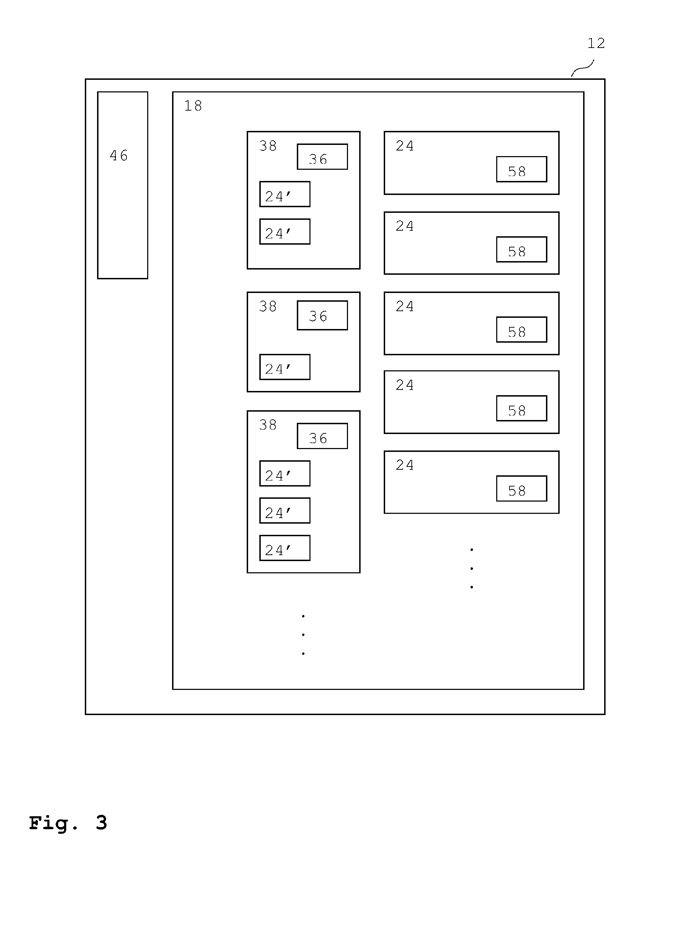

Figur 3 zeigt den Webserver 12 und die Datenbasis 18 sowie deren Inhalt mit weiteren Details. Bei einer Ausführungsform des Verfahrens ist vorgesehen, dass die Verarbeitungseinheit 46 zum Zugriff auf die Datenbasis 18 anhand der jeweils übermittelten Signatur 36 und der davon mittelbar oder unmittelbar umfassten, das jeweiligen Haushaltsgerät 10 identifizierenden Kennung 34 (Figur 1), also z.B. weil die Signatur 36 mittel- oder unmittelbar auf die Kennung 34 zurückgeht, aus einer Mehrzahl von in der Datenbasis 18 zur Verfügung stehenden Haushaltsgerätprogrammen 24 eine Gruppe von Haushaltsgerätprogrammen 24 auswählt, die anhand der jeweils dem Haushaltsgerätetyp spezifischen Kennung 34 als zu dem zugrunde liegenden Haushaltsgerät 10 passend identifizierbar sind. Dazu ist vorgesehen, dass jedes Haushaltsgerätprogramm 24 eine Identifikationsnummer 58 oder sonstige individuelle Programmkennung 58 aufweist. Durch einen Vergleich der das Haushaltsgerät 10 kodierenden Kennung 34 mit der Identifikationsnummer 58 kann jedes Haushaltsgerätprogramm 24 entweder als zu dem jeweiligen Haushaltsgerät 10 passend oder zu dem Haushaltsgerät 10 nicht passend identifiziert werden. Das oder jedes als passend erkannte Haushaltsgerätprogramm 24 bildet die von dem Verarbeitungsprogramm 46 ausgewählte Gruppe von Haushaltsgerätprogrammen 24, die einem Verwender des Computers 16 beim Zugriff auf die Datenbasis 18 zur Auswahl angeboten werden. Figur 3 zeigt auch, dass die Verarbeitungseinheit 46 anhand der vom Computer 16 übertragenen Signatur 36 einen Datensatz 38 mit einer passenden Signatur 36 ermittelt und in dem Datensatz 38 ausgewählte und/oder übertragene Haushaltsgerätprogramme 24' protokolliert. Wenn in dem Datensatz 38 nur solche Haushaltsgerätprogramme 24' protokolliert werden, für die eine vom Haushaltsgerät 10 generierte Quittung 54 übertragen wurde, kann beim nächsten Zugriff auf die Datenbasis 18 die Gruppe der anhand der Signatur 36 und der davon umfassten Kennung 34 als für das Haushaltsgerät 10 passend identifizierten Haushaltsgerätprogramme 24 um das oder jedes bereits übertragene Haushaltsgerätprogramm 24 verringert werden, so dass sich eine optimale Übersicht über die für den Benutzer des Haushaltsgeräts 10 noch relevanten Haushaltsgerätprogramme 24 der Datenbasis 18 ergibt.

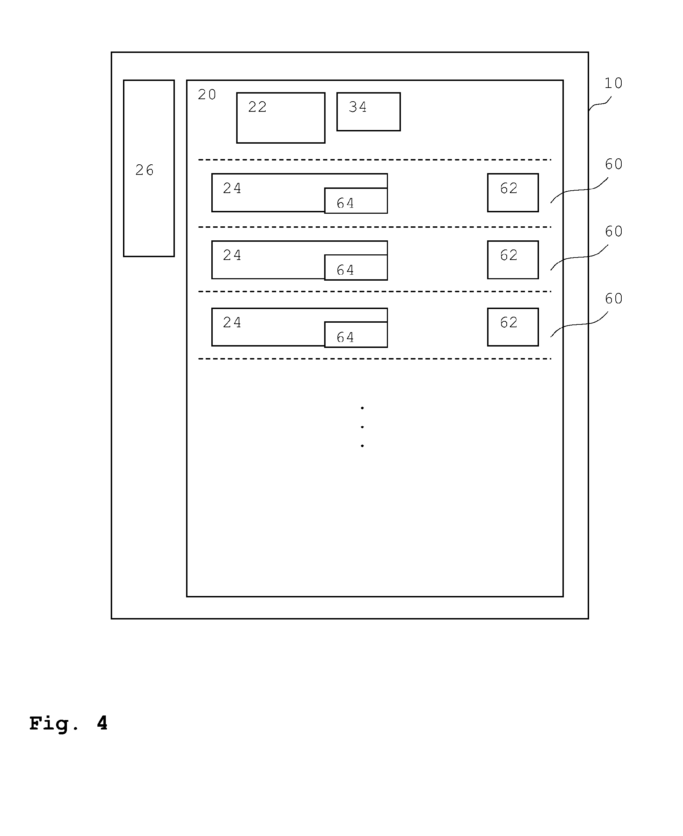

Figur 4 zeigt abschließend Details der Steuerungseinrichtung des Haushaltsgeräts 10. Übliche Funktionseinheiten des Haushaltsgeräts 10, wie z.B. die Waschtrommel usw., sind dabei weggelassen. Figur 4 zeigt, dass im Speicher 20 der Steuerungseinrichtung des Haushaltsgeräts 10 zur Aufnahme der Haushaltsgerätprogramme 24 Speicherbereiche 60 gebildet sind. Beim Transferieren eines Haushaltsgerätprogramms 24 in den Speicher 20 des Haushaltsgeräts 10 erfolgt der Transfer zunächst in einen als frei gekennzeichneten Speicherbereich 60. Nach Abschluss des Transfers wird eine Integrität des transferierten Haushaltsgerätprogramms 24 geprüft und nur bei erfolgreicher Prüfung des transferierten Haushaltsgerätprogramms 24 als verwendbar markiert. Zur Realisierung dieses Aspekts einer besonderen Ausführungsform des Verfahrens kommen mehrere grundsätzlich gleichwertige Realisierungen in Betracht. Zur Integritätsprüfung des transferierten Haushaltsgerätprogramms 24 kann ein Vergleich einer Kennung, etwa einer CRC-Signatur, herangezogen werden. Zur Markierung eines Haushaltsgerätprogramms 24 als verwendbar kann eine entsprechende Markierung des Haushaltsgerätprogramms 24 selbst oder des jeweiligen Speicherbereichs 60 erfolgen. Dargestellt ist eine solche Markierung 62 in Figur 4 für den Speicherbereich 60 und je nach dem Wert der Markierung 62 kann diese den Speicherbereich 60 als frei kennzeichnen oder das davon umfasste Haushaltsgerätprogramm 24 als verwendbar.

Bei einer weiteren Ausführungsform des Verfahrens ist vorgesehen, dass bei einem zum Haushaltsgerät 10 transferierten Haushaltsgerätprogramm 24 im Zusammenhang mit dessen Markierung als verwendbar das Steuerungsprogramm 22 ein etwaiges älteres Haushaltsgerätprogramm 24, das durch das transferierte Haushaltsgerätprogramm 24 ersetzt wird, als inaktiv markiert. Die oben bereits erwähnte, jeweils einem Speicherbereich 60 zugeordnete Markierung 62 kann auch verwendet werden, um ein älteres Haushaltsgerätprogramm 24 als inaktiv zu markieren. Zum Erkennen, ob ein transferiertes Haushaltsgerätprogramm 24 ein älteres Haushaltsgerätprogramm 24 ersetzt, ist im einfachsten Fall vorgesehen, dass jedes Haushaltsgerätprogramm 24 eine dem jeweiligen Programm 24 zugeordnete Identifikationsnummer 64 umfasst, ggf. eine um eine Revisionsnummer ergänzte Identifikationsnummer 64, so dass anhand eines Vergleichs der Identifikationsnummern 64 erkennbar ist, ob sich im Speicher 20 mehrere gleiche Haushaltsgerätprogramme 24 befinden. Speziell im Zusammenhang mit dem Transfer eines neuen Haushaltsgerätprogramms 24 kann dessen Identifikationsnummer 64 mit den Identifikationsnummern 64 aller bereits im Speicher 20 vorhandenen Haushaltsgerätprogrammen 24 verglichen werden und ein dabei aufgefundenes, durch das transferierte Haushaltsgerätprogramm 24 ersetztes älteres Haushaltsgerätprogramm 24 als inaktiv markiert werden.

Einzelne im Vordergrund stehende Aspekte der hier vorgelegten Beschreibung lassen sich damit kurz wie folgt zusammenfassen: Es wird ein Verfahren zum Aktualisieren oder Ergänzen von Haushaltsgerätprogrammen 24 im Speicher 20 eines Haushaltsgeräts 10 angegeben, das die folgenden Schritte umfasst: Es wird eine kommunikative Verbindung zwischen dem Haushaltsgerät 10 und einer im Internet 14 bereitgestellten Datenbasis 18 hergestellt. In der Datenbasis 18 wird mindestens ein Haushaltsgerätprogramm 24 ausgewählt. Das oder jedes ausgewählte Haushaltsgerätprogramm 24 wird zum Waschautomat 10 übertragen und in dessen Speicher 20 transferiert. Das oder jedes ausgewählte Haushaltsgerätprogramm 24 kann dabei vor oder im Zusammenhang mit der Übertragung zum Haushaltsgerät 10 mit einer das Haushaltsgerät 10 identifizierenden Kennung 34 kodiert werden, so dass jedes übertragene Haushaltsgerätprogramm 24 für dasjenige Haushaltsgerät 10, für den es bestimmt ist, individualisiert ist.

### Bezugszeichenliste

- 10: Waschautomat
- 12: Webserver
- 14: Internet
- 16: Computer
- 18: Datenbasis
- 20: Speicher (des Haushaltsgeräts)
- 22: Steuerungsprogramm
- 24: Waschautomatenprogramm / Haushaltsgerätprogramm
- 26: Verarbeitungseinheit (des Waschautomaten / des Haushaltgeräts)
- 28: Verarbeitungseinheit (des Computers)
- 30: Speicher (des Computers)
- 32: Computerprogramm
- 34: Kennung
- 36: Signatur
- 38: Datensatz
- 40: ./.
- 42: Anmeldung
- 44: Auswahl
- 46: Verarbeitungsprogramm
- 48: Vergleich
- 50: Kodierung
- 52: Transfer
- 54: Quittung
- 56: Protokollierung
- 58: Identifikationsnummer
- 60: Speicherbereich
- 62: Markierung
- 64: Identifikationsnummer

## Patentansprüche

1. Verfahren zum Betreiben eines Haushaltsgeräts (10),
wobei das Haushaltsgerät (10) einen Speicher (20) mit einem Steuerungsprogramm (22) und zumindest einem vom Steuerungsprogramm (22) ausführbaren Haushaltsgerätprogramm (24) sowie eine Verarbeitungseinheit (26) zur Ausführung des Steuerungsprogramms (22) umfasst,
wobei ein mit dem Internet (14) und dem Haushaltsgerät (10) kommunikativ verbindbarer oder von dem Haushaltsgerät (10) umfasster Computer (16) ein Computerprogramm (32) zum Austausch von Daten mit dem Haushaltsgerät (10) und einer im Internet (14) bereitgestellten Datenbasis (18) umfasst,
wobei mit dem Computer (16) unter Kontrolle des Computerprogramms (32) in der Datenbasis (18) zumindest ein dort zur Verfügung gestelltes Haushaltsgerätprogramm (24) ausgewählt, auf den Computer (16) übertragen und von dort in den Speicher (20) des Haushaltsgeräts (10) transferiert wird.

2. Verfahren nach Anspruch 1, wobei beim ersten Zugriff auf die Datenbasis (18) im Zusammenhang mit einer Anmeldung (42) zum Zugriff auf die Datenbasis (18) zumindest anhand einer das Haushaltsgerät (10) identifizierenden Kennung (34) eine Signatur (36) erstellt und im Bereich der Datenbasis (18) in einem Datensatz (38) gespeichert sowie zum Computer (16) übertragen wird,
wobei im Zusammenhang mit der Auswahl (44) eines Haushaltsgerätprogramms (24) vom Computer (16) die dortige Signatur (36) übertragen sowie im Bereich der Datenbasis (18) mit der oder jeder dort gespeicherten Signatur (36) verglichen wird, wobei bei erfolgreichem Vergleich das oder jedes ausgewählte Haushaltsgerätprogramm (24) zumindest mit der das Haushaltsgerät (10) identifizierenden Kennung (34) kodiert und zum Computer (16) übertragen wird.

3. Verfahren nach Anspruch 2, wobei am Computer (16) zumindest ein von der Datenbasis (18) übertragenes Haushaltsgerätprogramm (24) zum Transfer zum Haushaltsgerät (10) ausgewählt wird, wobei im Zusammenhang mit dem Transfer zum Haushaltsgerät (10) das Steuerungsprogramm (22) des Haushaltsgeräts (10) das oder jedes transferierte oder zu transferierende Haushaltsgerätprogramm (24) hinsichtlich dessen Kodierung mit der das Haushaltsgerät (10) identifizierenden Kennung (34) prüft und eine Quittung (54) generiert und zum Computer (16) übermittelt, sobald der Transfer der Haushaltsgerätprogramme (24) in den Speicher des Haushaltsgeräts (10) erfolgreich abgeschlossen wurde oder werden kann.

4. Verfahren nach Anspruch 3, wobei die vom Haushaltsgerät (10) generierte Quittung (54) mit dem Computer (16) unter Kontrolle des Computerprogramms (28) zur Datenbasis (18) übertragen wird.

5. Verfahren nach einem der Ansprüche 2 bis 4, wobei ein Verarbeitungsprogramm (46) im Bereich der Datenbasis (18) und zum Zugriff auf diese aus der Datenbasis (18) anhand der übermittelten Signatur (36) und der davon umfassten Kennung (34) aus einer Mehrzahl von in der Datenbasis (18) zur Verfügung stehenden Haushaltsgerätprogrammen (24) eine Gruppe von Haushaltsgerätprogrammen (24) auswählt, die anhand der Kennung (34) als zu dem zugrunde liegenden Haushaltsgerät (10) passend identifizierbar sind.

6. Verfahren nach Anspruch 5, wobei das Verarbeitungsprogramm (46) anhand der vom Computer (16) übertragenen Signatur (36) einen Datensatz (38) mit einer passenden Signatur (36) ermittelt und in dem Datensatz (38) ausgewählte und/oder übertragene Haushaltsgerätprogramme (24') protokolliert.

7. Verfahren nach Anspruch 4 und Anspruch 6, wobei in dem Datensatz (38) solche Haushaltsgerätprogramme (24') protokolliert werden, für die eine vom Haushaltsgerät (10) generierte Quittung (54) übertragen wurde.

8. Verfahren nach einem der Ansprüche 1 bis 7, wobei beim Transferieren eines Haushaltsgerätprogramms (24) in den Speicher (20) des Haushaltsgeräts (10) der Transfer zunächst in einen als frei gekennzeichneten Speicherbereich (60) erfolgt und wobei nach Abschluss des Transfers eine Integrität des transferierten Haushaltsgerätprogramms (24) geprüft wird und nur bei erfolgreicher Prüfung das transferierte Haushaltsgerätprogramms (24) als verwendbar markiert wird.

9. Verfahren nach Anspruch 8, wobei bei einem zum Haushaltsgerät (10) transferierten Haushaltsgerätprogramm (24) im Zusammenhang mit dessen Markierung als verwendbar das Steuerungsprogramm (22) ein etwaiges älteres Haushaltsgerätprogramm (24), das durch das transferierte Haushaltsgerätprogramm (24) ersetzt wird, als inaktiv markiert.

10. Haushaltsgerät (10) zur Verwendung in einem Verfahren nach einem der Ansprüche 1 bis 9, mit einem Speicher (20) und einem in den Speicher (20) geladenen Steuerungsprogramm (22)
mit Computerprogrammanweisungen zur Generierung einer Signatur (36) anhand einer das Haushaltsgerät (10) identifizierenden Kennung (34),
mit Computerprogrammanweisungen zum Ausführen eines in den Speicher (20) geladenen Haushaltsgerätprogramms (24),
mit Computerprogrammanweisungen zum Transferieren eines von extern übertragenen Haushaltsgerätprogramms (24) in den Speicher (20),
mit Computerprogrammanweisungen zur Prüfung einer Integrität eines in den Speicher (20) transferierten Haushaltsgerätprogramms (24).

11. Haushaltsgerät (10) nach Anspruch 11, wobei das Steuerungsprogramm (22) Computerprogrammanweisungen zum Vergleich des transferierten Haushaltsgerätprogramms (24) mit bereits zuvor in dem Speicher (20) befindlichen Haushaltsgerätprogrammen (24) umfasst.

12. Verfahren zum Aktualisieren oder Ergänzen von Haushaltsgerätprogrammen (24) im Speicher (20) eines Haushaltsgeräts (10) mit folgenden Schritten:

13. Herstellen einer kommunikativen Verbindung zwischen dem Haushaltsgerät (10) und einer im Internet (14) bereitgestellten Datenbasis (18),
Auswählen mindestens eines Haushaltsgerätprogramms (24) in der Datenbasis (18), Übertragen des oder jedes ausgewählten Haushaltsgerätprogramms (24) zum Haushaltsgerät (10) und Transfer in dessen Speicher (20).

14. Verfahren nach Anspruch 12, wobei das oder jedes ausgewählte Haushaltsgerätprogramm (24) vor oder im Zusammenhang mit der Übertragung zum Haushaltsgerät (10) mit einer das Haushaltsgerät (10) identifizierenden Kennung (34) kodiert wird.

## Geänderte Patentansprüche

### Geänderte Patentansprüche gemäss Regel 137(2) EPÜ.

**1.** Verfahren zum Betreiben eines Haushaltsgeräts (10),
wobei das Haushaltsgerät (10) einen Speicher (20) mit einem Steuerungsprogramm (22) und zumindest einem vom Steuerungsprogramm (22) ausführbaren Haushaltsgerätprogramm (24) sowie eine Verarbeitungseinheit (26) zur Ausführung des Steuerungsprogramms (22) umfasst,
wobei ein mit dem Internet (14) und dem Haushaltsgerät (10) kommunikativ verbindbarer oder von dem Haushaltsgerät (10) umfasster Computer (16) ein Computerprogramm (32) zum Austausch von Daten mit dem Haushaltsgerät (10) und einer im Internet (14) bereitgestellten Datenbasis (18) umfasst,
wobei mit dem Computer (16) unter Kontrolle des Computerprogramms (32) in der Datenbasis (18) zumindest ein dort zur Verfügung gestelltes Haushaltsgerätprogramm (24) ausgewählt, auf den Computer (16) übertragen und von dort in den Speicher (20) des Haushaltsgeräts (10) transferiert wird, wobei am Computer (16) zumindest ein von der Datenbasis (18) übertragenes Haushaltsgerätprogramm (24) zum Transfer zum Haushaltsgerät (10) ausgewählt wird,
**dadurch gekennzeichnet,**
**dass** wobei im Zusammenhang mit dem Transfer zum Haushaltsgerät (10) das Steuerungsprogramm (22) des Haushaltsgeräts (10) das oder jedes transferierte oder zu transferierende Haushaltsgerätprogramm (24) hinsichtlich dessen Kodierung mit der das Haushaltsgerät (10) identifizierenden Kennung (34) prüft und eine Quittung (54) generiert und zum Computer (16) übermittelt, sobald der Transfer der Haushaltsgerätprogramme (24) in den Speicher des Haushaltsgeräts (10) erfolgreich abgeschlossen wurde oder werden kann.

**2.** Verfahren nach Anspruch 1, wobei beim ersten Zugriff auf die Datenbasis (18) im Zusammenhang mit einer Anmeldung (42) zum Zugriff auf die Datenbasis (18) zumindest anhand einer das Haushaltsgerät (10) identifizierenden Kennung (34) eine Signatur (36) erstellt und im Bereich der Datenbasis (18) in einem Datensatz (38) gespeichert sowie zum Computer (16) übertragen wird,
wobei im Zusammenhang mit der Auswahl (44) eines Haushaltsgerätprogramms (24) vom Computer (16) die dortige Signatur (36) übertragen sowie im Bereich der Datenbasis (18) mit der oder jeder dort gespeicherten Signatur (36) verglichen wird, wobei bei erfolgreichem Vergleich das oder jedes ausgewählte Haushaltsgerätprogramm (24) zumindest mit der das Haushaltsgerät (10) identifizierenden Kennung (34) kodiert und zum Computer (16) übertragen wird.

**3.** Verfahren nach Anspruch 1, wobei die vom Haushaltsgerät (10) generierte Quittung (54) mit dem Computer (16) unter Kontrolle des Computerprogramms (28) zur Datenbasis (18) übertragen wird.

**4.** Verfahren nach einem der Ansprüche 2 bis 3, wobei ein Verarbeitungsprogramm (46) im Bereich der Datenbasis (18) und zum Zugriff auf diese aus der Datenbasis (18) anhand der übermittelten Signatur (36) und der davon umfassten Kennung (34) aus einer Mehrzahl von in der Datenbasis (18) zur Verfügung stehenden Haushaltsgerätprogrammen (24) eine Gruppe von Haushaltsgerätprogrammen (24) auswählt, die anhand der Kennung (34) als zu dem zugrunde liegenden Haushaltsgerät (10) passend identifizierbar sind.

**5.** Verfahren nach Anspruch 4, wobei das Verarbeitungsprogramm (46) anhand der vom Computer (16) übertragenen Signatur (36) einen Datensatz (38) mit einer passenden Signatur (36) ermittelt und in dem Datensatz (38) ausgewählte und/oder übertragene Haushaltsgerätprogramme (24') protokolliert.

**6.** Verfahren nach Anspruch 3 und Anspruch 5, wobei in dem Datensatz (38) solche Haushaltsgerätprogramme (24') protokolliert werden, für die eine vom Haushaltsgerät (10) generierte Quittung (54) übertragen wurde.

**7.** Verfahren nach einem der Ansprüche 1 bis 6, wobei beim Transferieren eines Haushaltsgerätprogramms (24) in den Speicher (20) des Haushaltsgeräts (10) der Transfer zunächst in einen als frei **gekennzeichnet**en Speicherbereich (60) erfolgt und wobei nach Abschluss des Transfers eine Integrität des transferierten Haushaltsgerätprogramms (24) geprüft wird und nur bei erfolgreicher Prüfung das transferierte Haushaltsgerätprogramms (24) als verwendbar markiert wird.

**8.** Verfahren nach Anspruch 7, wobei bei einem zum Haushaltsgerät (10) transferierten Haushaltsgerätprogramm (24) im Zusammenhang mit dessen Markierung als verwendbar das Steuerungsprogramm (22) ein etwaiges älteres Haushaltsgerätprogramm (24), das durch das transferierte Haushaltsgerätprogramm (24) ersetzt wird, als inaktiv markiert.

**9.** Haushaltsgerät (10) zur Verwendung in einem Verfahren nach einem der Ansprüche 1 bis 8, mit einem Speicher (20) und einem in den Speicher (20) geladenen Steuerungsprogramm (22)
mit Computerprogrammanweisungen zur Generierung einer Signatur (36) anhand einer das Haushaltsgerät (10) identifizierenden Kennung (34),
mit Computerprogrammanweisungen zum Ausführen eines in den Speicher (20) geladenen Haushaltsgerätprogramms (24),
mit Computerprogrammanweisungen zum Transferieren eines von extern übertragenen Haushaltsgerätprogramms (24) in den Speicher (20),
mit Computerprogrammanweisungen zur Prüfung einer Integrität eines in den Speicher (20) transferierten Haushaltsgerätprogramms (24).

**10.** Haushaltsgerät (10) nach Anspruch 9, wobei das Steuerungsprogramm (22) Computerprogrammanweisungen zum Vergleich des transferierten Haushaltsgerätprogramms (24) mit bereits zuvor in dem Speicher (20) befindlichen Haushaltsgerätprogrammen (24) umfasst.

**11.** Verfahren zum Aktualisieren oder Ergänzen von Haushaltsgerätprogrammen (24) im Speicher (20) eines Haushaltsgeräts (10) mit folgenden Schritten:
- Herstellen einer kommunikativen Verbindung zwischen dem Haushaltsgerät (10) und einer im Internet (14) bereitgestellten Datenbasis (18),
- Auswählen mindestens eines Haushaltsgerätprogramms (24) in der Datenbasis (18),
- Übertragen des oder jedes ausgewählten Haushaltsgerätprogramms (24) zum Haushaltsgerät (10) und Transfer in dessen Speicher (20).

**12.** Verfahren nach Anspruch 11, wobei das oder jedes ausgewählte Haushaltsgerätprogramm (24) vor oder im Zusammenhang mit der Übertragung zum Haushaltsgerät (10) mit einer das Haushaltsgerät (10) identifizierenden Kennung (34) kodiert wird.
